(19) Europäisches Patentamt / European Patent Office / Office européen des brevets

(11) **EP 4 553 825 A1**

(12) **EUROPEAN PATENT APPLICATION**

(43) Date of publication:
**14.05.2025 Bulletin 2025/20**

(21) Application number: **24205724.8**

(22) Date of filing: **10.10.2024**

(51) International Patent Classification (IPC):
**G10K 15/02** (2006.01)   **B60Q 5/00** (2006.01)

(52) Cooperative Patent Classification (CPC):
**G10K 15/02; B60Q 5/008**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.11.2023 JP 2023190667**

(71) Applicant: **TOYOTA JIDOSHA KABUSHIKI
KAISHA
Aichi-ken, 471-8571 (JP)**

(72) Inventors:
• **HARA, Yoshikazu**
  **Toyota-shi, Aichi-ken, 471-8571 (JP)**
• **YAMANAKA, Tomio**
  **Toyota-shi, Aichi-ken, 471-8571 (JP)**
• **HIRAIWA, Hiroshi**
  **Toyota-shi, Aichi-ken, 471-8571 (JP)**
• **FUKUHARA, Chie**
  **Toyota-shi, Aichi-ken, 471-8571 (JP)**

(74) Representative: **Cabinet Beau de Loménie
158, rue de l'Université
75340 Paris Cedex 07 (FR)**

(54) **SOUND CONTROL METHOD AND SOUND CONTROL DEVICE**

(57)     An interior sound to be output from a room speaker (16) of an electric vehicle (10) is generated. An environmental state (EES) of the electric vehicle (10) is estimated based on at least one of information on driving environment of the electric vehicle (10) and information on surrounding environment of the electric vehicle (10). It is determined whether a process condition of the interior sound (EGS) is satisfied based on the estimated result of the environmental state (EES). When it is determined that the process condition of the interior sound (EGS) is satisfied, the interior sound (EGS) is processed based on the information on a sound process specification (PS) corresponding to the estimated result used for the determination of the process condition and is output from the room speaker.

FIG. 7

EP 4 553 825 A1

## Description

## TECHNICAL FIELD

The present disclosure relates to a technology applied to an electric vehicle using an electric motor as a power unit for traveling.

## BACKGROUND

JP2011215437A discloses a sound control device mounted on a vehicle that can be driven by an electric motor. The sound control device calculates engine rotational speed of a virtual engine of a virtual engine vehicle based on traveling information on the electric vehicle and a simulation result of an operation of a component part of the virtual engine vehicle. The sound control device also controls virtual engine sound inside the electric vehicle based on the calculated engine rotational speed. In the control of the virtual engine sound, a sound effect corresponding to the operation of the component part of the virtual engine vehicle is determined based on the simulation result of the operation. Then, the determined sound effect is added to the virtual engine sound.

References showing a technical level related to the present disclosure include JP2022036005A and JP2011213273A, in addition to JP2011215437A.

By adding the sound effect corresponding to the operation of the component part of the virtual engine vehicle to the virtual engine sound, a driver of the electric vehicle is provided with a sense of presence as if the driver were driving a real engine vehicle. On the other hand, the driver of the vehicle is required to perform a cautious driving or a safe driving in consideration of surroundings of the electric vehicle, and thus an environmental state in which the sense of presence should not be prioritized is also assumed. Therefore, the sound control device has room for improvement from this aspect.

The present disclosure has been made in view of the above problems. An object of the present disclosure is to provide a technique capable of appropriately transmitting information corresponding to an environmental state of an electric vehicle to a driver while giving the driver a sense of presence by pseudo engine sound output in a cabin of the electric vehicle that can be driven by an electric motor.

## SUMMARY

A first aspect of the present disclosure is a sound control method applied to an electric vehicle using an electric motor as a power unit for traveling, and has the following features.

The sound control method includes generating an interior sound to be output from a room speaker of the electric vehicle, estimating an environmental state of the electric vehicle based on at least one of information on driving environment of the electric vehicle and information on surrounding environment of the electric vehicle, determining whether a process condition of the interior sound is satisfied based on the estimated result of the environmental state, and processing the interior sound based on information on sound process specification corresponding to the estimated result of the environmental state used for determining the process condition and outputting the processed interior sound from the room speaker when it is determined that the process condition of the interior sound is satisfied.

A second aspect of the present disclosure is a sound control device applied to an electric vehicle using an electric motor as a power unit for traveling, and has the following features.

The sound control device includes one or more memory devices and one or more processors. The one or more memory device store information on driving environment of the electric vehicle, information on surrounding environment of the electric vehicle, and information indicating a correspondence between a specific environmental state of the electric vehicle and a sound process specification. The one or more processors are configured to perform various processing.

The one or more processors are configured to generate an interior sound to be output from a room speaker of the electric vehicle, estimate an environmental state of the electric vehicle based on at least one of information on driving environment of the electric vehicle and information on surrounding environment of the electric vehicle, determine whether a process condition of the interior sound is satisfied based on the estimated result of the environmental state, and process the interior sound based on information on sound process specification corresponding to the estimated result of the environmental state used for the determination of the process condition and output the interior sound to the room speaker when it is determined that the process condition of the interior sound is satisfied.

According to the present disclosure, it is determined whether the process condition of the interior sound generated to be output from the room speaker is satisfied based on the estimated result of the environmental state of the electric vehicle. When it is determined that the process condition is satisfied, the interior sound is processed based on the information on sound process specification corresponding to the estimated result used for the determination of the process condition and is output from the room speaker. By processing the interior sound based on the information on sound process specification, the interior sound including information corresponding to the environmental state of the vehicle can be output from the room speaker. Therefore, when the interior sound is output from the room speaker, it is possible to appropriately transmit information corresponding to the environmental state of the electric vehicle to the driver. Further, when the interior sound includes the pseudo engine sound, it is possible to appropriately convey information corresponding to the environmental state of the electric vehicle to the driver while giving the driver a sense of presence by the output of the pseudo engine sound.

## BRIEF DESCRIPTION OF DRAWINGS

FIG. 1 is a conceptual diagram illustrating an electric vehicle and a sound control device according to a first embodiment;
FIG. 2 is a block diagram illustrating an example of a basic functional configuration of the sound control device;
FIG. 3 is a block diagram illustrating another example of the basic functional configuration of the sound control device;
FIG. 4 is a block diagram illustrating an example of a functional configuration of the sound control device particularly related to the first embodiment;
FIG. 5 is a diagram illustrating an example of a relationship between a specific environmental state and a sound process specification;
FIG. 6 is a block diagram illustrating another example of the functional configuration of the sound control device particularly relevant to the first embodiment;
FIG. 7 is a flowchart illustrating a flow of sound control processing particularly related to the first embodiment;
FIG. 8 is a block diagram illustrating a first configuration example of a power control system of the electric vehicle;
FIG. 9 is a diagram illustrating examples of an engine model, a clutch model, and a transmission model constituting a manual transmission vehicle model;
FIG. 10 is a diagram illustrating torque characteristics of the electric motor realized by motor control using the manual transmission vehicle model in comparison with the torque characteristics of the electric motor realized by a normal motor control as the electric vehicle;
FIG. 11 is a block diagram illustrating a second configuration example of the power control system of the electric vehicle;
FIG. 12 is a conceptual diagram illustrating an overall configuration of a system including a sound control device according to a second embodiment;
FIG. 13 is a block diagram illustrating an example of the functional configuration of the sound control device particularly related to the second embodiment;
FIG. 14 is a conceptual diagram illustrating an electric vehicle and a sound control device according to a third embodiment; and
FIG. 15 is a block diagram illustrating an example of the functional configuration of the sound control device particularly relevant to a third embodiment.

## DESCRIPTION OF EMBODIMENT

Hereinafter, embodiments of the present disclosure will be described with reference to the drawings. In the drawings, the same or corresponding parts are denoted by the same reference numerals, and the description thereof will be simplified or omitted.

1. First embodiment

1-1. Overall configuration and pseudo engine sound

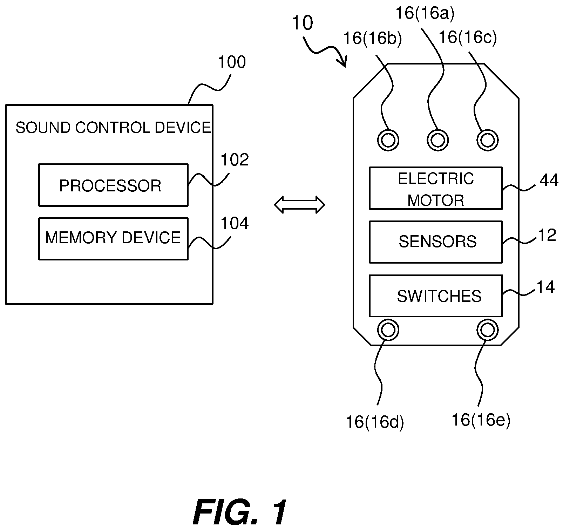

FIG. 1 is a conceptual diagram illustrating an electric vehicle 10 according to a first embodiment of the present disclosure and a sound control device 100 applied to the electric vehicle 10. The electric vehicle 10 includes an electric motor 44. Examples of the electric motor 44 include a brushless DC MOTOR and a three phase AC synchronous motor. The electric vehicle 10 uses the electric motor 44 as a power unit for traveling.

The electric vehicle 10 is also provided with various sensors 12. The various sensors 12 include operation state sensors such as an accelerator position sensor, a brake position sensor, and a shift position sensor, and driving state sensors such as a wheel speed sensor, an acceleration sensor, and a rotation speed sensor. The accelerator position sensor detects an operation amount (an accelerator position) of a gas pedal. The brake position sensor detects an operation amount of a brake pedal. The shift position sensor detects a shift position. The wheel speed sensor detects rotational speed of wheels of the electric vehicle 10. The acceleration sensor detects lateral acceleration or longitudinal acceleration of the electric vehicle 10. The rotational speed sensor detects rotational speed of the electric motor 44.

The various sensors 12 also include a position sensor such as a global navigation satellite system (GNSS) sensor, a recognition sensor such as a camera, a radar, and a laser imaging detection and ranging (LIDAR), a sound sensor such as a microphone, and a traffic monitoring sensor such as a rain sensor, a fog sensor, and an illuminance sensor. The GNSS sensor detects a position and a posture of the electric vehicle 10. The camera captures an image of at least the front of the electric vehicle 10. The radar and the LIDAR recognize a situation around the electric vehicle 10. The microphone collects sound around the electric vehicle 10. The rain sensor measures the amount of raindrops around the electric vehicle 10. The fog sensor measures a line-of-sight distance (visibility) in front of the electric vehicle 10. The illuminance sensor measures a brightness around the electric vehicle 10.

The electric vehicle 10 is also provided with various switches 14. The various switches 14 include operation switches such as a blinker switch, a light switch, a wiper switch, and an ignition switch. The blinker switch switches a working status (ON / OFF) of the direction indicator lamp. The light switch switches the working status (ON / OFF) of a light (e.g., a headlight or a fog lamp). The wiper switch switches the working status (ON / OFF) of a wiper. The ignition switch switches the working status (ON / OFF) of a power supply circuit of the electric vehicle 10.

The electric vehicle 10 further includes a speaker 16. The speaker 16 corresponds to a "room speaker" of the present disclosure. The speaker 16 outputs sound inside the electric vehicle 10. In the example shown in FIG. 1, the speakers 16 include three front speakers 16a, 16b, and 16c and two rear speakers 16d and 16e. The total number of speakers constituting the speaker 16 and the layout of the speaker 16 can be arbitrarily changed.

The sound control device 100 generates a sound (hereinafter, also referred to as an "interior sound") to be output from the speaker 16. The sound control device 100 also outputs the generated interior sound from the speaker 16. For example, the sound control device 100 generates pseudo engine sound as the interior sound and outputs the generated interior sound from the speaker 16. In another example, the sound control device 100 generates an interior sound including the pseudo engine sound and outputs the generated interior sound from the speaker 16.

The entire sound control device 100 may be mounted on the electric vehicle 10. As another example, at least a part of the sound control device 100 may be included in a management server outside the electric vehicle 10. In this case, the sound control device 100 may remotely generate the interior sound, receive the generated interior sound, and output the sound from the speaker 16.

In general, the sound control device 100 includes at least one processor 102 and at least one memory device 104. The processor 102 executes various processes. Examples of the processor 102 include a central processing unit (CPU), a graphics processing unit (GPU), an application specific integrated circuit (ASIC), and a field-programmable gate array (FPGA). The memory device 104 stores various information. Examples of the memory device 104 include a volatile memory, a nonvolatile memory, a hard disk drive (HDD), and a solid state drive (SSD).

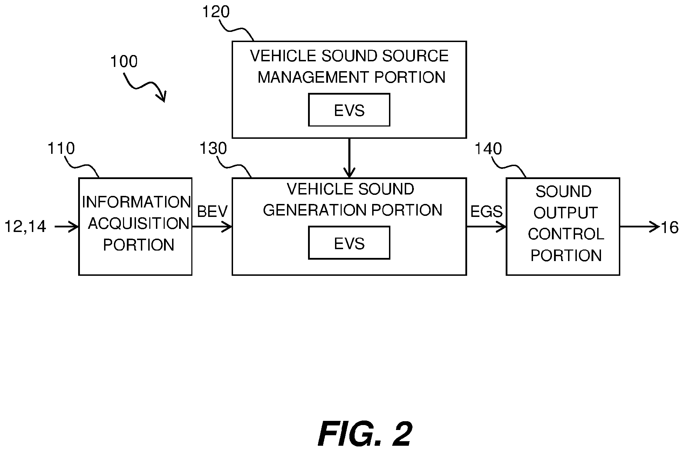

FIG. 2 is a block diagram illustrating an example of a basic functional configuration of the sound control device 100. The sound control device 100 includes, as function blocks, an information acquisition portion 110, a vehicle sound source management portion 120, an engine sound generation portion 130, and a sound output control portion 140. These function blocks are realized by a cooperation of the processor 102 and the memory device 104, for example.

The information acquisition portion 110 acquires information BEV regarding the electric vehicle 10. The information BEV includes information on driving state of the electric vehicle 10, information on driving environment DEN of the electric vehicle 10, information SEN on surrounding environment of the electric vehicle 10, and the like. The information BEV is typically detected or measured by the various sensors 12 and the various switches 14. A part of the information DEN is obtained by combining information (e.g., positional information) detected by the various sensors 12 with three-dimensional map data.

The information BEV includes virtual engine speed Ne. Here, it is assumed that the electric vehicle 10 uses the virtual engine as a power unit for traveling. The virtual engine speed Ne is a rotation speed of the virtual engine when it is assumed that the electric vehicle 10 is driven by the virtual engine. For example, the information acquisition portion 110 may calculate the virtual engine speed Ne to increase as the wheel speed increases. In addition, when the electric vehicle 10 has a manual mode (MT mode) described later, the information acquisition portion 110 may calculate the virtual engine speed Ne in the manual mode based on the wheel speed, the total reduction ratio, and the slip ratio of the virtual clutch. The details of the method of calculating the virtual engine speed Ne in the manual mode will be described later.

The vehicle sound source management portion 120 stores sound source data EVS of the engine vehicle used for generating the pseudo engine sound. The vehicle sound source management portion 120 is mainly implemented by the memory device 104. Typically, the sound source data EVS includes a plurality of types of sound source data. The plurality of types of sound source data include, for example, sound source data of sounds caused by engine combustion (for low rotational speed, medium rotational speed, and high rotational speed), sound source data of sounds caused by operation of input devices such as gears and clutches (for low rotational speed, medium rotational speed, and high rotational speed), sound source data of noise sounds, sound source data of event sounds (for example, engine stall sounds), and the like. Each sound source data is generated in advance through simulation or the like based on an engine model and a vehicle model of an engine vehicle. Each sound source data can be flexibly adjusted. That is, at least one of the sound pressures and the frequency of the sound indicated by the sound source data can be flexibly adjusted.

The engine sound generation portion 130 (an engine sound simulator) is a simulator that generates the pseudo engine sound. The engine sound generation portion 130 acquires at least a part of the information BEV from the information acquisition portion 110. In particular, the engine sound generation portion 130 acquires information on the virtual engine speed Ne and the vehicle speed from the information acquisition portion 110. The engine sound generation portion 130 reads the sound source data EVS of the engine vehicle from the vehicle sound source management portion 120. The engine sound generation portion 130 generates pseudo engine sound corresponding to the operating state (the virtual engine speed Ne or the vehicle speed) of the electric vehicle 10 by combining one or more sound source data included in the sound source data EVS of the engine vehicle. The engine sound data EGS is data indicating the generated pseudo engine sound.

The generation of the pseudo engine sound is a well-known technique, and the method of generating the pseudo engine sound applicable to the present disclosure is not particularly limited. For example, the pseudo engine sound may be generated by a known engine sound simulator employed in video games or the like. A method may be used in which a virtual engine speed Ne-frequency map and a virtual engine torque-sound pressure map are prepared, the frequency of the pseudo engine sound is increased or decreased in proportion to the virtual engine speed Ne, and the sound pressure of the pseudo engine sound is increased or decreased in proportion to the virtual engine torque.

The sound output control portion 140 receives the engine sound data EGS generated by the engine sound generation portion 130. The sound output control portion 140 outputs the engine sound data EGS from the speaker 16. When the engine sound data EGS is output, the sound output control portion 140 controls the sound pressure of the pseudo engine sound by controlling the amplifier by the sound output control portion 140. The sound output control portion 140 controls a frequency modulator (FMC) to change the frequency of the pseudo engine sound.

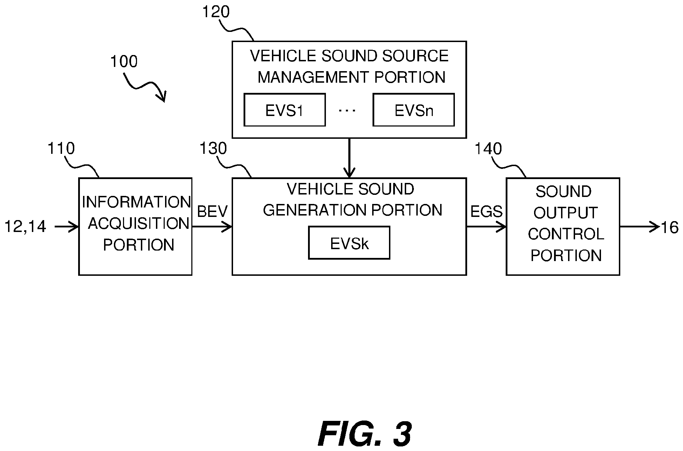

FIG. 3 is a block diagram illustrating another example of the basic functional configuration of the sound control device 100. In the example shown in FIG. 3, the vehicle sound source management portion 120 stores sound source data EVS (EVS1, ..., EVSn) of a plurality of types of engine vehicles corresponding to a plurality of vehicle types (1, ..., n). That is, the vehicle sound source management portion 120 stores sound source data EVS of engine vehicle for each vehicle type. The sound source data EVSk ($1 \leq k \leq n$) is generated in advance based on the engine model or the vehicle model of the vehicle type corresponding to the sound source data. The driver may designate his / her favorite vehicle type from among a plurality of vehicle types. In this case, the engine sound generation portion 130 acquires sound source data EVSk corresponding to the vehicle type designated by the driver. Then, the engine sound generation portion 130 generates the pseudo engine sound using the acquired sound source data EVSk of the engine vehicle. Thus, the driver can feel as if he/she is driving a vehicle of his / her favorite type.

1-2. Process of pseudo engine sound

The pseudo engine sound is output from the speaker 16, and thus the electric vehicle 10node driver is provided with a sense of realism as if the driver were driving a real engine vehicle. On the other hand, the driver is required to perform cautious driving or safe driving in consideration of the surroundings of the electric vehicle 10. Therefore, in the first embodiment, the engine sound data EGS as the interior sound is processed as appropriate based on the information included in the information BEV (specifically, at least one of the information DEN and the information SEN). When this process is performed, the processed engine sound data EGS (hereinafter, also referred to as "engine sound data EGS_P") is output from the speaker 16.

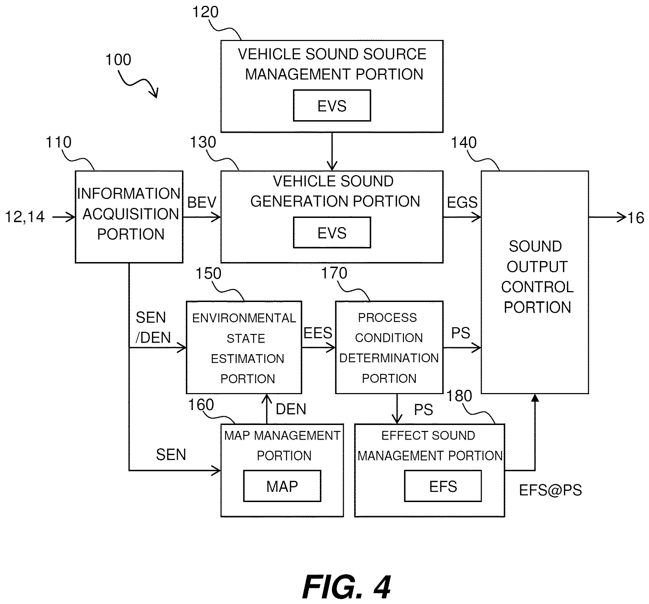

FIG. 4 is a block diagram illustrating an example of a functional configuration of the sound control device 100 particularly related to the first embodiment. In the example shown in FIG. 4, the sound control device 100 includes an environmental state estimation portion 150, a map management portion 160, a process condition determination portion 170, and a sound effect management portion 180, in addition to the function blocks described in FIG. 2. These function blocks are realized by cooperation of the processor 102 and the memory device 104, for example.

The environmental state estimation portion 150 estimates the environmental state of the electric vehicle 10 based on at least one of the information DEN and the information SEN. For example, the information SEN may include positional information of the electric vehicle 10 acquired by the position sensor such as the GNSS sensor, recognition information around the electric vehicle 10 acquired by the recognition sensor such as the camera, environmental sound information around the electric vehicle 10 collected by the microphone, traffic monitoring information around the electric vehicle 10 acquired by the traffic monitoring sensor such as the rain sensor, and the like. The information DEN includes traveling area information on the electric vehicle 10, construction information on a periphery of the electric vehicle 10, and the like. The information DEN also includes operation information on an operation switch such as the blinker switch. The information DEN may include vehicle type information on engine vehicle specified by the driver.

The environmental state estimation portion 150 may also transmit the estimated result EES of the environmental state of the electric vehicle 10 to the process condition determination portion 170.

The map management portion 160 stores three-dimensional map data MAP. The map management portion 160 is mainly implemented by the memory device 104. The three-dimensional map data MAP includes positional information of roads, detailed information on roads (e.g., types of curves and straight lines, curvatures of roads, longitudinal slopes, and transverse gradients), positional information on intersections and divergent points, and positional information on constructions. The map management portion 160 may generate information on driving environment (i.e., information DEN) of the electric vehicle 10 by combining the positional information of the electric vehicle 10 and the three-dimensional map data MAP. The map management portion 160 transmits the generated information DEN to the environmental state estimation portion 150.

The process condition determination portion 170 determines whether a process condition of the engine sound data EGS as the interior sound is satisfied. The determination of whether the process condition is satisfied is made based on the estimated result EES received from the environmental state estimation portion 150. In the first embodiment, a specific environmental state ES for processing the engine sound data EGS is listed in advance, and the list is referred to using the estimated result EES. Then, when there is the estimated result EES that matches the specific environmental state ES, it is determined that the process condition is satisfied.

For example, the specific environmental state ES includes following states:

(1) The visibility of the electric vehicle is poor;

(2) The traveling road surface of the electric vehicle is poor;

(3) A moving object (e.g., a walker or a bicycle) is detected around the electric vehicle;

(4) An approach of an emergency vehicle (e.g., an ambulance or a fire truck) to the electric vehicle is detected;

(5) Entry of the electric vehicle into a noise-reduction recommended zone (e.g., a school zone a railroad crossing zone or a residential area) is detected;

(6) When the electric vehicle changes its traveling lane from a first lane to a second lane, a following vehicle is detected in the second lane;

(7) A sound pressure of an ambient noise of the electric vehicle (e.g., a railroad crossing sound, a pedestrian crossing sound, or a horn sound) exceeds a threshold;

(8) Entry of the electric vehicle into a tunnel area is detected;

(9) Approach to an event area (e.g., an outdoor music festival, a firework, an outdoor stadium) by the electric vehicle is detected;

(10) Entry of the electric vehicle into a highland area is detected; and

(11) A reproduction mode of the engine sound in the electric vehicle is set to a convertible car (an open car) reproduction mode.

The information DEN and/or the information SEN used for the estimation of the environmental state corresponding to the respective specific environmental states ES (1) to (11) described above are as follows, for example.

(1) A raindrop amount measured by the rain sensor, a line-of-sight distance by the fog sensor, and a working status of the light switch

(2) A raindrop amount measurement by the rain sensor, a recognition result based on a camera image, and a working status of the wiper switch

(3) A recognition result based on a camera image

(4) A result of analyzing ambient environmental sound by the microphone and a recognition result based on a camera image

(5) An actual position of the electric vehicle

(6) A working status of the blinker switch, a recognition result based on a camera image

(7) A result of analysis of ambient environmental sound by the microphone

(8) An actual position of the electric vehicle

(9) An actual position of the electric vehicle and an analysis result of ambient environmental sound by the microphone

(10) An actual position (height) of the electric vehicle

(11) A vehicle type of the engine vehicle specified by the driver

When it is determined that the process condition is satisfied, the process condition determination portion 170 sets the sound process specification PS corresponding to the estimated result EES used for the determination of the process condition. The set sound process specifications PS are transmitted to the sound output control portion 140 and the sound effect management portion 180.

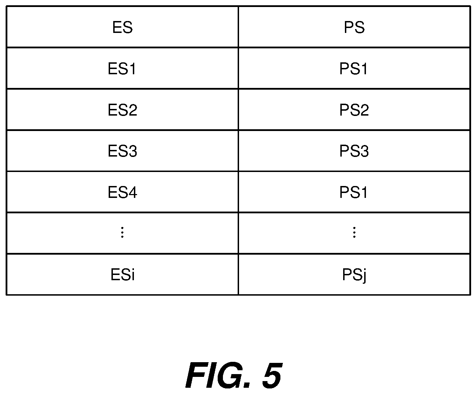

In the first embodiment, a correspondence between a specific environmental state ES and a sound process specification PS is set in advance. FIG. 5 is a diagram for explaining an example of the correspondence between a specific environmental state ES and a sound process specification PS. FIG. 5 shows specific environmental states ES1, ES2, ES3, ES4, ..., ESi ("i" is a positive integer) and the sound process specification PS corresponding to the respective environmental states ES. In detail, the sound process specification PS corresponding to the environmental state ES 1 is PS 1. In addition, the sound process specification PS corresponding to the environmental state ES2 is PS2, the sound process specification PS corresponding to the environmental state ES3 is PS3, the sound process specification PS corresponding to the environmental state ES4 is PS1, and the sound process specification PS corresponding to the environmental state ESi is PSj (j ≤ i).

The environmental states ES1, ES2, ES3, ES4, ..., ESi are any of the specific environmental states ES (1) to (11) described above. The sound process specification PS corresponding to the specific environmental states ES (1) to (11) are, for example, as follows.

(1) The sound pressure of the engine sound data EGS is lowered (including mute sound pressure, the same applies hereinafter).

(2) The output timing of the engine sound data EGS to be moved vertically in response to the change of the accelerator position is delayed from the normal output timing.

(3) The sound pressure of the engine sound data EGS is lowered.

(4) The sound pressure of the engine sound data EGS is lowered, the ambient environmental sound is superimposed on the engine sound data EGS, or the sound effect corresponding to the emergency vehicle sound is superimposed on the engine sound data EGS.

(5) The sound pressure of the engine sound data EGS is lowered.

(6) The sound pressure of the engine sound data EGS is lowered.

(7) The sound pressure of the engine sound data EGS is lowered.

(8) The sound effect corresponding to the tunnel wall reflection sound is superimposed on the engine sound data EGS.

(9) The sound pressure of the engine sound data EGS is lowered, the ambient environmental sound is superimposed on the engine sound data EGS, or the sound effect corresponding to the event being held in the event area is superimposed on the engine sound data EGS.

(10) The sound effect corresponding to abnormal burning sound of engine is superimposed on engine sound data EGS.

(11) The sound effect corresponding to intake air sound and exhaust sound of the engine is superimposed on engine sound data EGS.

The sound effect management portion 180 stores sound source data EFS of the sound effect. The sound effect management portion 180 is mainly implemented by the memory device 104. The sound source data EFS includes a plurality of types of sound source data corresponding to a specific environmental state ES. The plurality of types of sound source data include, for example, sound source data of an emergency vehicle siren (emergency vehicle sound) corresponding to a specific environmental state ES (4), sound source data of a sound generated in an event (event sound) corresponding to a specific environmental state ES (8), sound source data of a tunnel echo sound corresponding to a specific environmental state ES (9), sound source data of an abnormal burning sound corresponding to a specific environmental state ES (10), sound source data of an intake air sound and an exhaust sound of an engine corresponding to a specific environmental state ES (11), and the like. Each sound source data is generated in advance through simulation or the like.

The sound effect management portion 180 transmits the sound source data EFS @ PS of the sound effect corresponding to the sound process specification PS to the sound output control portion 140 based on the information on sound process specification PS received from the process condition determination portion 170.

The sound output control portion 140 outputs the engine sound data EGS received from the engine sound generation portion 130 to the speaker 16. The functions up to this point are the same as those described in FIG. 2. When the sound process specification SP are received from the process condition determination portion 170, the sound output control portion 140 processes the engine sound data EGS received from the engine sound generation portion 130 based on the information on sound process specification SP. Then, the processed engine sound data EGS (i.e., the engine sound data EGS_P) is output from the speaker 16. The sound pressure and the output timing of the engine sound data EGS are changed by, for example, controlling an amplifier.

The sound effect is superimposed on the engine sound data EGS based on the sound source data EFS of the sound effect received from the sound effect management portion 180. Here, the sound process specification SP of the specific environmental states (4) and (9) described above may include superimposing the sound effect only on the engine sound data EGS output from the speaker 16 in the estimated direction of the sound source (the emergency vehicle, the event area). In this case, the engine sound data EGS_P may be output from the speaker 16 (e.g., the front speaker 16b) in the estimated direction of the sound source. The sound process specification SP of the specific environmental state (8) may include adjustment of the sound pressure of the reflected sound to be superimposed on the engine sound data EGS in accordance with the difference in the lateral distance from the electric vehicle to the tunnel wall. For example, the sound pressure of the reflected sound of the speaker group (e.g., the front speaker 16b and the rear speaker 16d) close to the tunnel wall may be relatively high, and the sound pressure of the speaker group (e.g., the front speaker 16c and the rear speaker 16e) far from the tunnel wall may be relatively low.

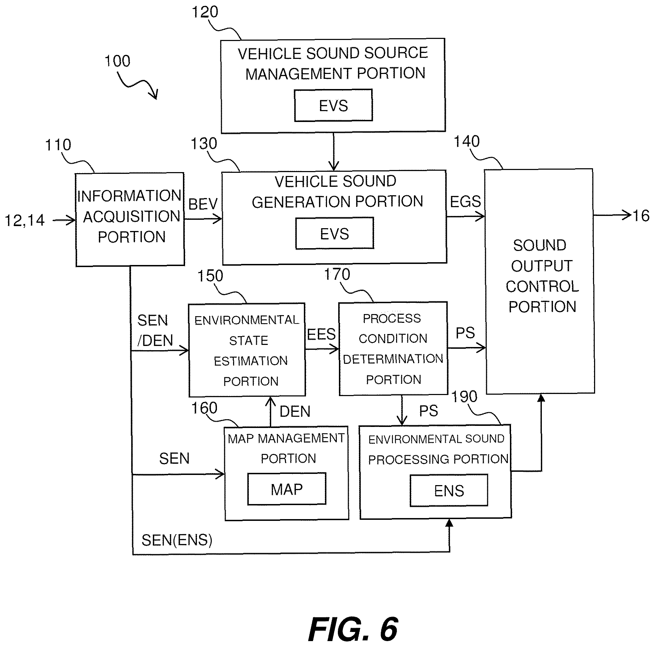

The ambient environmental sound is superimposed on the engine sound data EGS using the environmental sound data ENS collected by the microphone. FIG. 6 is a block diagram illustrating an example of a functional configuration of the sound control device 100 for superimposing ambient environmental sound on the engine sound data EGS. In the example shown in FIG. 6, the sound control device 100 includes an environmental sound processing portion 190 instead of the sound effect management portion 180 described in FIG. 4. The environmental sound processing portion 190 may temporarily store environmental sound data ENS around the electric vehicle 10 collected by the microphone included in the information SEN. When receiving the sound process specification PS from the process condition determination portion 170, the environmental sound processing portion 190 transmits the environmental sound data ENS to the sound output control portion 140.

When the sound process specification SP are received from the process condition determination portion 170, the sound output control portion 140 processes the engine sound data EGS received from the engine sound generation portion 130 based on the information on sound process specification SP. The surrounding environmental sound is superimposed on the engine sound data EGS based on the environmental sound data ENS received from the environmental sound processing portion 190.

1-3. Sound control processing

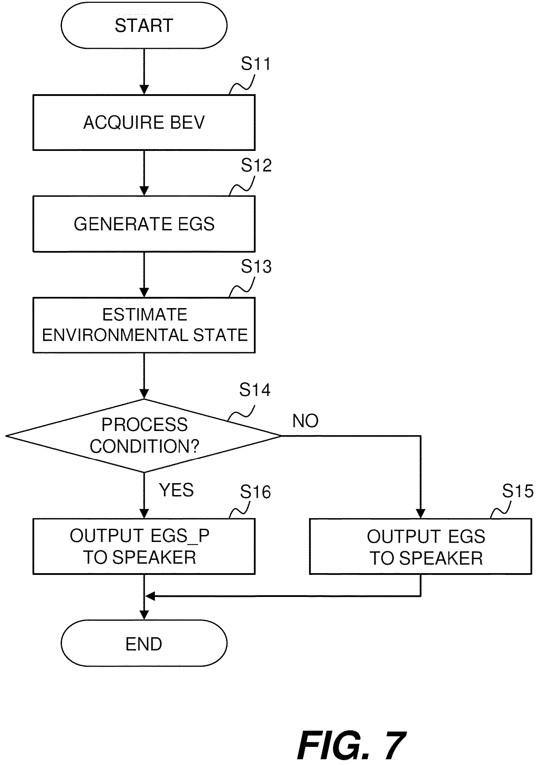

FIG. 7 is a flowchart illustrating the flow of sound control processing particularly related to the first embodiment. The flowchart shown in FIG. 7 is repeatedly executed by the processor 102 shown in FIG. 1 at a predetermined control cycle.

In the routine shown in FIG. 7, first, the information BEV is acquired (step S11). As described above, the information BEV is information on the electric vehicle 10, and includes the information on the driving state of the electric vehicle 10, information on the driving environment DEN of the electric vehicle 10, information on the surrounding environment of the electric vehicle SEN, the virtual engine speed Ne, and the like.

Following the processing of step S11, the engine sound data EGS is generated (step S12). The engine sound data EGS is generated based on the information of the virtual engine speed Ne and the vehicle speed acquired in step S 11. When the information of the vehicle type of the engine vehicle designated by the driver is obtained in the processing of step S11, the information on the vehicle type is combined with the information on the virtual engine speed Ne and the vehicle speed to generate the engine sound data EGS.

Following the processing of step S12, the environmental state of the electric vehicle 10 is estimated (step S13). The environmental state of the electric vehicle 10 is estimated based on at least one of the information DEN and the information SEN acquired in step S11. When the environmental state is estimated, the estimated result EES of the environmental state is output.

Following the processing of step S13, it is determined whether the process condition of the engine sound data EGS is satisfied (step S14). The determination of whether the process condition is satisfied is performed by determining whether the estimated result EES of the environmental state output in step S13 matches a specific environmental state ES. If there is the estimated result EES that matches the particular environmental state ES, it is determined that the process condition is satisfied.

If the judgment result in step S14 is negative, the engine sound data EGS is output to the speaker 16 (step S15). The engine sound data EGS output to the speaker 16 is generated in the processing of step S12. On the other hand, if the judgment result in step S14 is positive, the engine sound data EGS_P is output to the speaker 16 (step S16). The engine sound data EGS_P output to the speaker 16 is obtained by processing the engine sound data EGS generated in the processing of step S12. The engine sound data EGS is processed based on the sound process specification PS corresponding to the specific environmental state ES that matches the estimated result EES in the determination of step S14.

1-4. Effect

According to the first embodiment, the engine sound data EGS is output from the speaker 16. Therefore, the driver of the electric vehicle 10 can be provided with a sense of realism as if he/she were driving an actual engine vehicle. If it is determined that the process condition of the engine sound data EGS is satisfied, the engine sound data EGS is processed based on the sound process specification PS, and the engine sound data EGS_P is output from the speaker 16. Therefore, an effect corresponding to the sound process specification PS is expected.

Examples of the effects according to the respective sound process specifications PS are as follows for the specific environmental states ES (1) to (11) described above.

(1) When the field of view is poor, the sound pressure of the engine sound data EGS is lowered, whereby the visual concentration of the driver can be enhanced.
(2) When the traveling road surface is poor, the output timing of the engine sound data EGS is delayed from the normal timing, so that the driver can be made aware of the road surface condition (a slippery condition).
(3) When a moving object exists, the sound pressure of the engine sound data EGS is lowered, whereby the driver can be alerted.
(4) When the vehicle approaches the emergency vehicle, the sound pressure of the engine sound data EGS is lowered, so that the driver can be made aware of the approach. Even when the sound source data EFS of the sound effect corresponding to the environmental sound data ENS or the emergency vehicle sound is superimposed on the engine sound data EGS, the driver can be made aware of the approach of the emergency vehicle.
(5) When the vehicle enters the noise-reduction recommended zone, the sound pressure of the engine sound data EGS is reduced, and thus driving (inattentive driving) in which the surroundings of the electric vehicle are taken into consideration can be performed.
(6) By lowering the sound pressure of the engine sound data EGS when the lane change from the first lane to the second lane is performed, the increase in the sound pressure is suppressed even if the electric vehicle is accelerated during the lane change. Therefore, the driver can be made aware of the presence of the following vehicle on the second lane.
(7) When the ambient noise exceeds the threshold, the sound pressure of the engine sound data EGS is lowered, whereby the driver can be alerted to the surroundings of the electric vehicle.

(8) When the vehicle enters the tunnel area, the sound effect corresponding to the tunnel reflected sound is superimposed on the engine sound data EGS, and thus the sense of realism can be enhanced.

(9) When the vehicle approaches the event area, the sound pressure of the engine sound data EGS is lowered, so that the driver can be made aware of the presence of the event. Even when the sound source data EFS of the sound effect corresponding to the event being held in the environmental sound data ENS or the event area is superimposed on the engine sound data EGS, the driver can be made aware of the presence of the event.

(10) In the case of entering the highland area, the sound effect corresponding to the abnormal burning sound of the engine is superimposed on the engine sound data EGS, and thus it is possible to increase the sense of presence.

(11) When the convertible car reproduction mode is set, the sound effect corresponding to the intake air sound and the exhaust sound of the engine is superimposed on the engine sound data EGS, and thus it is possible to increase the sense of realism.

1-5. Application to electric vehicle having manual mode (MT mode)

An electric motor used as a power unit for traveling in a general electric vehicle has a torque characteristic largely different from that of an internal combustion engine used as a power unit for traveling in a conventional vehicle (CV). Due to the difference in torque characteristics of the power units, the CV requires a transmission, whereas the electric vehicle generally does not have a transmission. Of course, a general electric vehicle is not provided with a manual transmission (MT) for changing a gear ratio by a manual operation of a driver. Therefore, there is a large difference in driving feeling between driving of a conventional vehicle with the MT (hereinafter, also referred to as "MT vehicle") and driving of an electric vehicle.

On the other hand, the electric motor can control the torque relatively easily by controlling the voltage and the field to be applied. Therefore, in the electric motor, by performing appropriate control, it is possible to obtain a desired torque characteristic within the operating range of the electric motor. By utilizing this feature, the torque of the electric vehicle can be controlled to simulate the torque characteristic unique to the MT vehicle. In addition, a pseudo MT vehicle may be provided in the electric vehicle so that the driver can obtain a sense of shifting. Thus, the MT vehicle can be simulated in the electric vehicle.

That is, the electric vehicle controls the output of the electric motor so as to simulate the torque characteristics unique to the MT vehicle. The driver operates the pseudo shifter to perform a pseudo manual shift operation. In response to the pseudo manual shift operation by the driver, the electric vehicle changes the torque characteristic by simulating MT vehicle. Thus, the driver of the electric vehicle can feel as if driving on the MT vehicle. The control mode of the electric motor for simulating the manual shift operation of the MT vehicle in this way is hereinafter referred to as a "manual mode" or an "MT mode".

The electric vehicle 10 according to the present disclosure may include such the manual mode (the MT mode). In the MT mode, the electric vehicle 10 generates the pseudo engine sound corresponding to the driving operation of the driver, and outputs the generated pseudo engine sound from the speaker 70. Since not only the driving operation of the MT vehicle but also the engine sound of the MT vehicle is reproduced, the satisfaction of the driver who demands reality is enhanced.

Hereinafter, a configuration example of the electric vehicle 10 having the manual mode (MT mode) will be described.

1-5-1. First configuration example

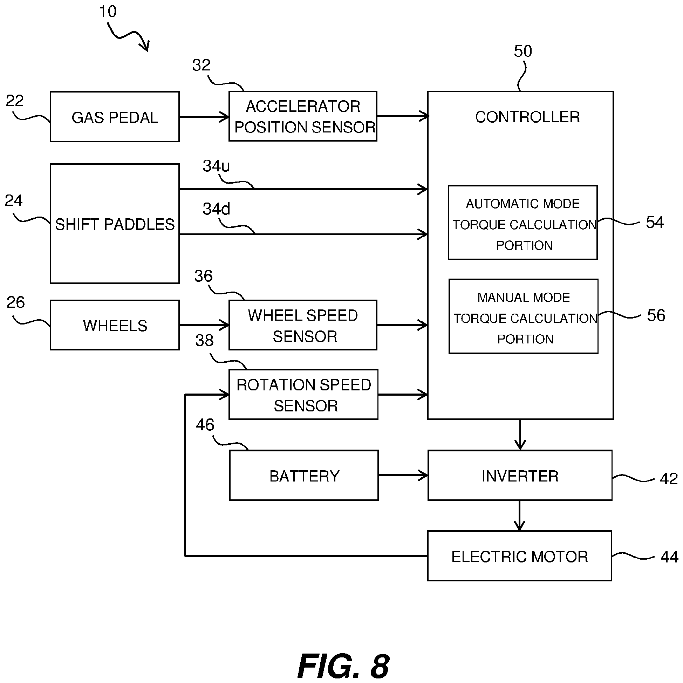

FIG. 8 is a block diagram illustrating a first configuration example of the power control system of the electric vehicle 10. The electric vehicle 10 includes the electric motor 44, a battery 46, and an inverter 42. The electric motor 44 is a power unit for traveling. The battery 46 stores electric energy for driving the electric motor 44. That is, the electric vehicle 10 is a battery electric vehicle (BEV) that travels with electric energy stored in the battery 46. The inverter 42 converts the dc power input from the battery 46 into the driving power of the electric motor 44 during acceleration. The inverter 42 converts regenerative power input from the electric motor 44 during deceleration into DC power, and charges the battery 46 with the DC power.

The electric vehicle 10 includes a gas pedal 22 for the driver to input an acceleration request to the electric vehicle 10. The gas pedal 22 is provided with an accelerator position sensor 32 for detecting an accelerator position.

The electric vehicle 10 is provided with pseudo shift paddles 24. The pseudo shift paddles 24 are dummy paddles different from the original paddle type shifter. The pseudo shift paddles 24 have a structure similar to shift paddles provided in a MT vehicle with no clutch pedal. The pseudo shift paddles 24 are mounted on the steering wheel. The pseudo shift paddles 24 include an up-shift switch and a down-shift switch for determining an operation position. The up-shift switch generates an up-shift signal 34u when pulled forward, and the down-shift switch generates a down-shift signal 34d when pulled forward.

A wheel speed sensor 36 is provided on the wheels 26 of the electric vehicle 10. The wheel speed sensor 36 is used as a vehicle speed sensor for detecting the vehicle speed of the electric vehicle 10. The electric motor 44 is provided with a rotational speed sensor 38 for detecting the rotational speed of the electric motor 44.

The electric vehicle 10 includes a controller 50. The controller 50 is typically an electronic control unit (ECU) mounted on the electric vehicle 10. The controller 50 may be a combination of a plurality of ECUs. The controller 50 includes an interface, a memory, and a processor. An in-vehicle network is connected to the interface. The memory includes a RAM for temporarily recording data and a ROM for storing a program executable by the processor and various data related to the program. The program is composed of a plurality of instructions. The processor reads a program or data from the memory and executes the program or data, and generates a control signal based on a signal acquired from each sensor.

For example, the controller 50 controls the electric motor 44 by PWM control of the inverter 42. The controller 50 receives signals from the accelerator position sensor 32, the pseudo shift paddles 24, the wheel speed sensor 36, and the rotation speed sensor 38 (the signal from the pseudo shift paddles 24 is an up-shift signal 34u and a down-shift signal 34d). The controller 50 processes these signals and calculates a motor torque command value for PWM-controlling the inverter 42.

The controller 50 includes the automatic mode (EV mode) and the manual mode (MT mode) as control modes. The automatic mode is a normal control mode for operating the electric vehicle 10 as a general electric vehicle. The automatic mode is programmed to continuously change the output of the electric motor 44 in response to the operation of the gas pedal 22. On the other hand, the manual mode is a control mode for driving the electric vehicle 10 like a MT vehicle. The manual mode is programmed to change the output characteristics of the electric motor 44 with respect to the operation of the gas pedal 22 in accordance with the up-shift operation and the down-shift operation of the pseudo shift paddles 24. That is, the manual mode is a control mode in which the output of the electric motor 44 can be changed in response to the driving operation of the vehicle components other than the gas pedal 22 and the brake pedal. The automatic mode (EV mode) and the manual mode (MT mode) can be switched.

The controller 50 includes an automatic mode torque calculation portion 54 and a manual mode torque calculation portion 56. Each of the portions 54 and 56 may be an independent ECU or may be a function of an ECU obtained by a processor executing a program recorded in a memory.

The automatic mode torque calculation portion 54 calculates the motor torque when the electric motor 44 is controlled in the automatic mode. The automatic mode torque calculation portion 54 stores a motor torque command map. The motor torque command map is a map for determining the motor torque from the accelerator position and the rotational speed of the electric motor 44. The signal of the accelerator position sensor 32 and the signal of the rotation speed sensor 38 are input to each parameter of the motor torque command map. The motor torque corresponding to these signals is output from the motor torque command map. Therefore, in the automatic mode, even if the driver operates the pseudo shift paddles 24, the operation is not reflected in the motor torque.

The manual mode torque calculation portion 56 comprises a MT vehicle model. The MT vehicle model is a model for calculating the drive wheels torque that should be obtained by the operation of the gas pedal 22 and the pseudo shift paddles 24 when the electric vehicle 10 is assumed to be a MT vehicle.

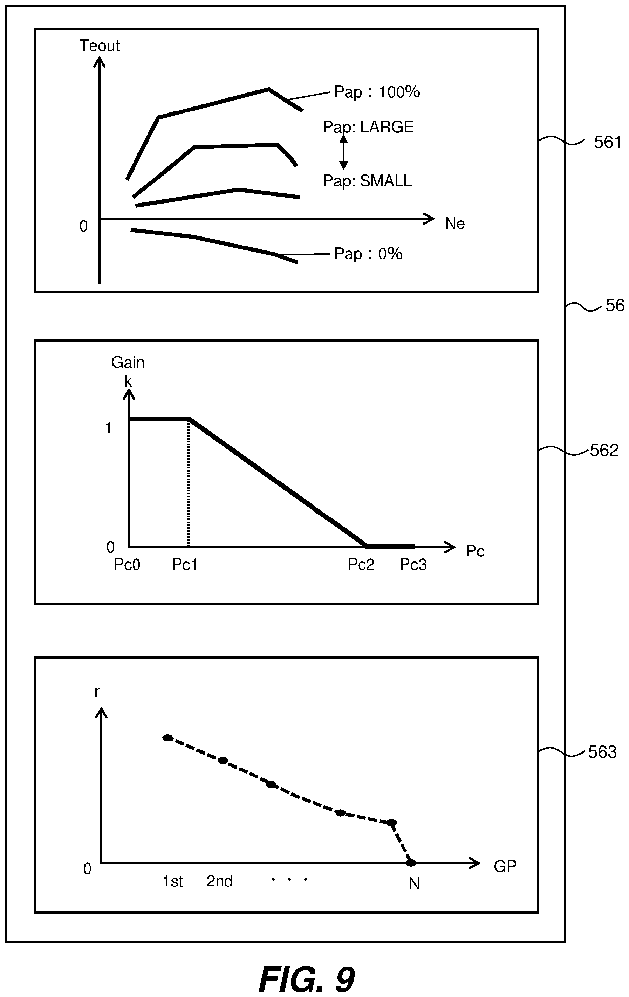

The MT vehicle model provided in the manual mode torque calculation portion 56 will be described with reference to FIG. 9. As shown in FIG. 9, the MT vehicle model includes an engine model 561, a clutch model 562, and a transmission model 563. The engine, the clutch, and the transmission virtually realized by the MT vehicle model are referred to as a virtual engine, a virtual clutch, and a virtual transmission, respectively. In the engine model 561, a virtual engine is modeled. In the clutch model 562, a virtual clutch is modeled. In the transmission model 563, virtual transmission is modeled.

The engine model 561 calculates a virtual engine speed Ne and a virtual engine output torque Teout. The virtual engine speed Ne is calculated based on the rotation speed Nw of the wheels, the overall reduction ratio R, and the slip ratio Rslip of the virtual clutch. For example, the virtual engine speed Ne is expressed by the following equation (1).

$$Ne=Nw*R/(1-Rslip) \quad (1)$$

The virtual engine output torque Teout is calculated from the virtual engine speed Ne and the accelerator position Pap. For the calculation of the virtual engine output torque Teout, as shown in FIG. 9, a map defining the relationship between the accelerator position Pap, the virtual engine speed Ne, and the virtual engine output torque Teout is used. In this map, the virtual engine output torque Teout with respect to the virtual engine speed Ne is given for each accelerator position Pap. The torque characteristic shown in FIG. 9 can be set to a characteristic assuming a gasoline engine or a characteristic assuming a diesel engine. Further, the characteristic can be set to a characteristic assuming a natural intake air engine, or can be set to a characteristic assuming an engine with turbocharger.

The clutch model 562 calculates a torque transmission gain k. The torque transmission gain k is a gain for calculating the degree of torque transmission of the virtual clutch according to the virtual clutch opening degree Pc. The virtual clutch opening degree Pc is normally 0%, and is temporarily opened to 100% in conjunction with switching of virtual gear stages of virtual transmission. The clutch model 562 has a map as shown in FIG. 9. In this map, the torque transmission gain k is given to the virtual clutch opening degree Pc. In FIG. 9, Pc0 corresponds to a position where the virtual clutch opening degree Pc is 0%, and Pc3 corresponds to a position where the virtual clutch opening degree Pc is 100%. The range from Pc0 to Pc1 and the range from Pc2 to Pc3 are dead bands in which the torque transmission gain k does not change due to the virtual clutch opening degree Pc. The clutch model 562 calculates the clutch output torque Tcout using the torque transfer gain k. The clutch output torque Tcout is a torque output from the virtual clutch. For example, the clutch output torque Tcout is given by the product of the virtual engine output torque Teout and the torque transmission gain k (Tcout=Teout*k).

The clutch model 562 calculates a slip ratio Rslip. The slip ratio Rslip is used for calculation of the virtual engine speed Ne in the engine model 561. For the calculation of the slip ratio Rslip, a map in which the slip ratio Rslip is given with respect to the virtual clutch opening degree Pc can be used, as in the case of the torque transmission gain k.

The transmission model 563 calculates a gear ratio (change gear ratio) r. The gear ratio r is a gear ratio determined by the virtual gear stage GP in the virtual transmission. The virtual gear stage GP is raised by one step in response to the up-shift operation of the pseudo shift paddles 24. On the other hand, the virtual gear stage GP is shifted down by one stage in response to the down-shift operation of the pseudo shift paddles 24. The transmission model 563 has a map as shown in FIG. 9. In this map, the gear ratio r is given to the virtual gear stage GP such that the gear ratio r becomes smaller as the virtual gear stage GP becomes larger. The transmission model 563 calculates the transmission output torque Tgout using the gear ratio r and the clutch output torque Tcout obtained from the map. For example, the gear output torque Tgout is given by the product of the clutch output torque Tcout and the gear ratio r (Tgout=Tcout*r). The transmission output torque Tgout changes discontinuously in accordance with the switching of the gear ratio r. This discontinuous change in the transmission output torque Tgout generates a shift shock, and the vehicle is made to look like a vehicle having a stepped transmission.

The MT vehicle model calculates the drive wheels torque Tw using a predetermined reduction gear ratio rr. The reduction ratio rr is a fixed value determined by the mechanical structure from the virtual transmission to the drive wheels. A value obtained by multiplying the reduction ratio rr by the gear ratio r is the above-described overall reduction ratio R. The MT vehicle model calculates the drive wheels torque Tw from the gearbox output torque Tgout and the reduction gear ratio rr. For example, the drive wheels torque Tw is given by the product of the gear ratio output torque Tgout and the reduction gear ratio rr (Tw=Tgout*rr).

The controller 50 converts the drive wheels torque Tw calculated by the MT vehicle model into the required motor torque Tm. The required motor torque Tm is a motor torque required to realize the drive wheels torque Tw calculated by the MT vehicle model. The reduction ratio from the output shaft of the electric motor 44 to the drive wheels is used for the conversion of the drive wheels torque Tw into the required motor torque Tm. The controller 50 controls the inverter 42 in accordance with the required motor torque Tm to control the electric motor 44.

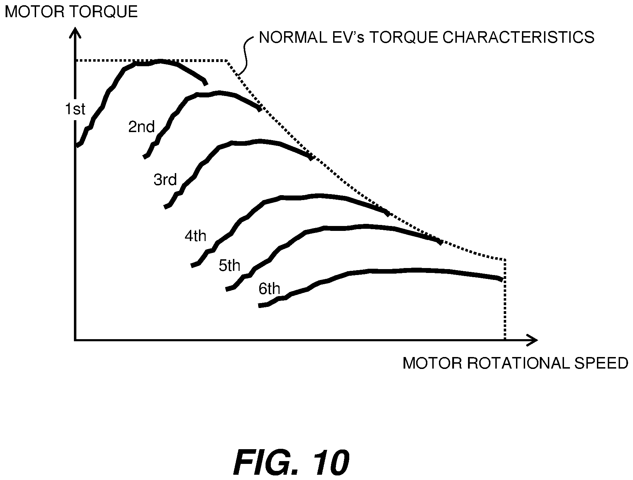

FIG. 10 is a diagram illustrating the torque characteristics of the electric motor 44 realized by the motor control using the MT vehicle model in comparison with the torque characteristics of the electric motor 44 realized by the normal motor control as an electric vehicle (EV). According to the motor control using the MT vehicle model, as shown in FIG. 10, it is possible to realize a torque characteristic (solid line in the drawing) simulating the torque characteristic of a MT vehicle in accordance with virtual gear stages set by the pseudo shift paddles 24. In FIG. 10, the number of the gear stages is six.

1-5-2. Second configuration example

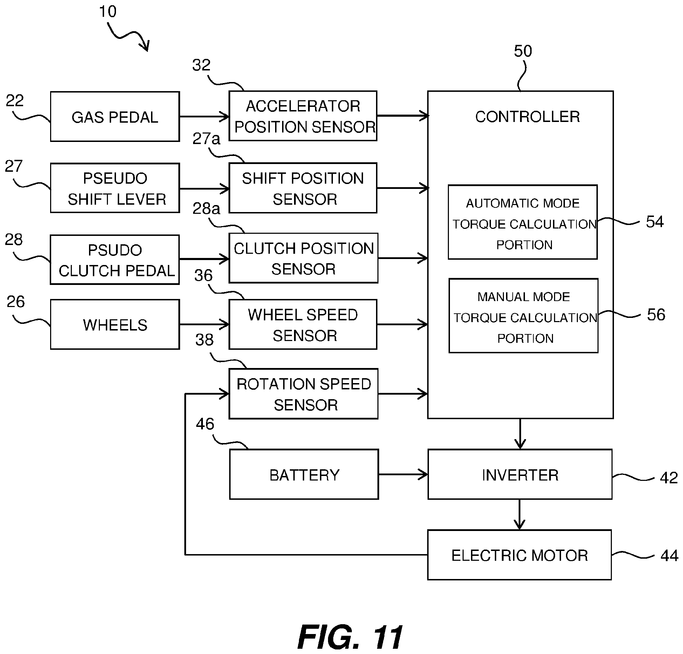

FIG. 11 is a block diagram illustrating a second configuration example of a power control system of the electric vehicle 10. Here, only the configuration different from the first configuration example described above will be described. Specifically, in the second configuration example, the electric vehicle 10 includes a pseudo shift lever 27 and a pseudo clutch pedal 28 instead of the pseudo shift paddles 24 included in the first configuration example. The pseudo shift lever 27 and the pseudo clutch pedal 28 are dummy members different from the original shift lever and clutch pedal.

The pseudo shift lever 27 has a structure simulating a shift lever provided in the MT vehicle. The arrangement and operational feeling of the pseudo shift lever 27 are equivalent to those of an actual MT vehicle. The pseudo shift lever 27 is provided with positions corresponding to the respective gear stages of, for example, the first speed, the second speed, the third speed, the fourth speed, the fifth speed, the sixth speed, the reverse, and the neutral. The pseudo shift lever 27 is provided with a shift position sensor 27a that detects a gear stage by determining which position the pseudo shift lever 27 is in.

The pseudo clutch pedal 28 has a structure simulating a clutch pedal provided in MT vehicle. The arrangement and operational feeling of the pseudo clutch pedal 28 are equivalent to those of an actual MT vehicle. The pseudo clutch pedal 28 is operated when the pseudo shift lever 27 is operated. That is, the driver depresses the pseudo clutch pedal 28 when the driver wants to change the setting of the gear stages by the pseudo shift lever 27, and stops depressing the pseudo clutch pedal 28 to return the pseudo clutch pedal 28 to the original state when the setting change of the gear stages is finished. The pseudo clutch pedal 28 is provided with a clutch position sensor 28a for detecting the amount of depression of the pseudo clutch pedal 28.

Signals from the accelerator position sensor 32, the shift position sensor 27a, the clutch position sensor 28a, the wheel speed sensor 36, and the rotation speed sensor 38 are input to the controller 50. The controller 50 processes these signals and calculates a motor torque command value for PWM control of the inverter 42.

The controller 50 includes the automatic mode and the manual mode as the control mode, similarly to the first configuration example described above. The automatic mode is programmed to continuously change the output of the electric motor 44 in response to the operation of the gas pedal 22. On the other hand, the manual mode is a control mode for driving the electric vehicle 10 like a MT vehicle. The manual mode is programmed to change the output of the electric motor 44 in response to the operation of the gas pedal 22 in accordance with the operation of the pseudo clutch pedal 28 and the pseudo shift lever 27. That is, the manual mode is a control mode in which the output of the electric motor 44 can be changed in response to the driving operation of the vehicle components other than the gas pedal 22 or the brake pedal.

The vehicle model included in the manual mode torque calculation portion 56 is the same as that shown in FIG. 9. However, the virtual clutch opening degree Pc is replaced with the depression amount of the pseudo clutch pedal 28 detected by the clutch position sensor 28a. The virtual gear stage GP is determined by the position of the pseudo shift lever 27 detected by the shift position sensor 27a.

## 2. Second embodiment

### 2-1. Overall Configuration

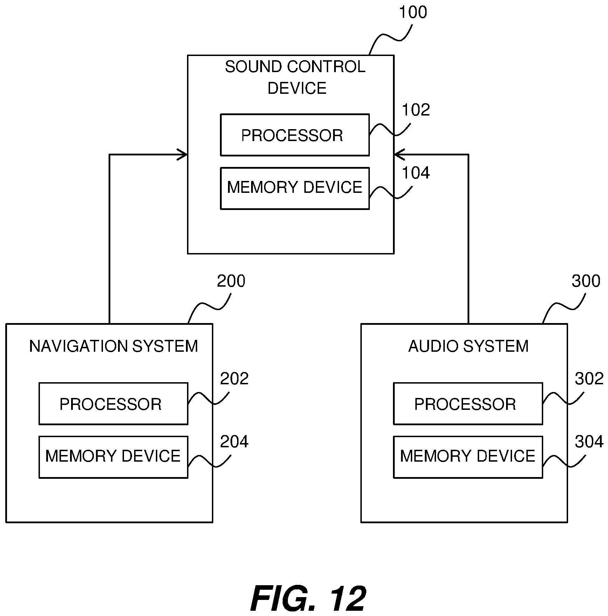

FIG. 12 is a conceptual diagram illustrating an overall configuration of a system including the sound control device 100 according to a second embodiment of the present disclosure. In the example shown in FIG. 12, the sound control device 100 is connected to a navigation system 200 and an audio system 300. The basic configurations of the navigation system 200 and the audio system 300 are the same as that of the sound control device 100. That is, the navigation system 200 includes at least one processor 202 and at least one memory device 204. The audio system 300 includes at least one processor 302 and at least one memory device 304.

The navigation system 200 may generate, for example, route guidance information from a current location to a destination of the electric vehicle 10. The route guidance information includes a guidance sound. The navigation system 200 outputs the guide sound to the sound control device 100. The audio system 300 outputs audio sound such as sound of a radio and a television mounted on the electric vehicle 10 and music played by a music player of the electric vehicle 10 to the sound control device 100.

### 2-2. Process of pseudo engine sound

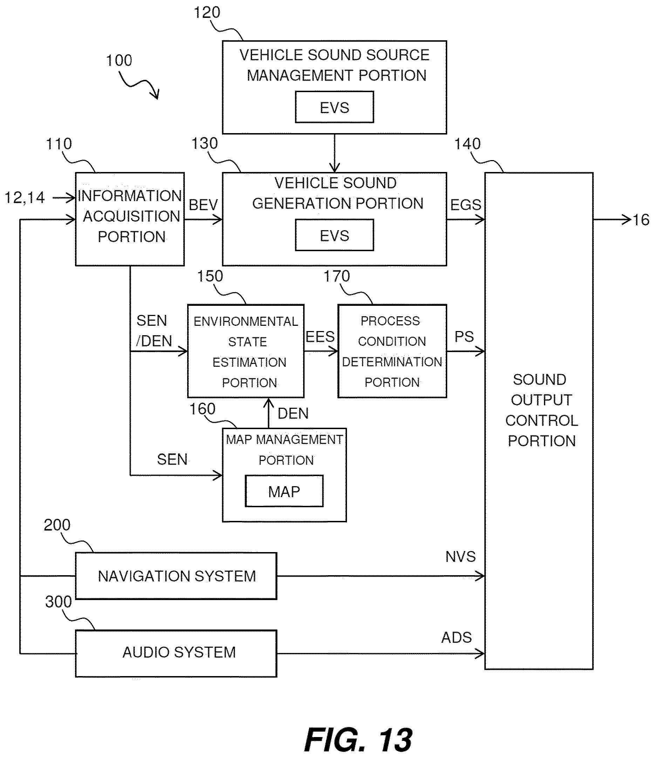

As in the first embodiment, the engine sound data EGS is processed in the second embodiment. FIG. 13 is a block diagram illustrating an example of a functional configuration of the sound control device 100 particularly relevant to the second embodiment. In the example shown in FIG. 13, the sound control device 100 includes function blocks 100 to 170 except for the sound effect management portion 180 shown in FIG. 4. These function blocks are realized by cooperation of the processor 102 and the memory device 104, for example.

The information acquisition portion 110 acquires status information of the navigation system 200 and the audio system 300. The status information may be included in the information on driving environment DEN of the electric vehicle 10. The status information of the navigation system 200 includes information of the output timing of the navigation sound data NVS.

The sound output control portion 140 receives the engine sound data EGS generated by the engine sound generation portion 130. The processing up to this point is the same as that of the first embodiment. The sound output control portion 140 also receives navigation sound data NVS from the navigation system 200. The sound output control portion 140 further receives audio sound data ADS from the audio system 300. The sound output control portion 140 outputs the engine sound data EGS, the navigation sound data NVS, and the audio sound data ADS from the speaker 16.

The environmental state estimation portion 150 estimates the environmental state of the electric vehicle 10 based on the information DEN (specifically, information on the output timing of the navigation sound data NVS). The environmental state estimation portion 150 also sends the estimated result EES of the environmental state to the process condition determination portion 170.

The process condition determination portion 170 determines whether a process condition of interior sound including engine sound data EGS, navigation sound data NVS, and audio sound data ADS is satisfied. The determination of whether the process condition is satisfied is made based on the estimated result EES received from the environmental state estimation portion 150. As in the first embodiment, in the second embodiment, a list is referred to using the estimated result EES. Then, when there is the estimated result EES that matches the specific environmental state ES, it is determined that the process condition is satisfied.

In the second embodiment, the specific environmental state ES includes the following state:

(12) The output timing of the navigation sound data NVS has arrived.

When it is determined that the process condition is satisfied, the process condition determination portion 170 sets the sound process specification PS corresponding to the estimated result EES used for the determination of the process condition. The set sound process specifications PS are transmitted to the sound output control portion 140. The sound process specification PS corresponding to a specific environmental state ES (12) are, for example, as follows.

(12) Decrease the sound pressure of the engine sound data EGS being output from the navigation sound data NVS decrease the sound pressure of the audio sound data ADS being output from the navigation sound data NVS or decrease the sound pressure of the engine sound data EGS and the audio sound data ADS being output from the navigation sound data NVS.

When the sound process specification SP are received from the process condition determination portion 170, the sound output control portion 140 processes at least one of the engine sound data EGS received from the engine sound generation portion 130 and the audio sound data ADS received from the audio system 300 based on the information on sound process specification SP. Then, the processed engine sound data EGS, the audio sound data ADS, and the navigation sound data NVS are output from the speaker 16.

The flow of the sound control processing related to the second embodiment is basically the same as that of the first embodiment described in FIG. 6.

2-3. Effect

According to the second embodiment, the same effect as the effect according to the first embodiment is expected. An example of the effect according to the sound process specification PS is as follows when the specific environmental state ES (12) is described.
(12) By lowering the sound pressure of at least one of the engine sound data EGS and the audio sound data ADS, the guide sound by the navigation system 200 can be correctly transmitted to the driver.

3. Third embodiment

3-1. Overall Configuration

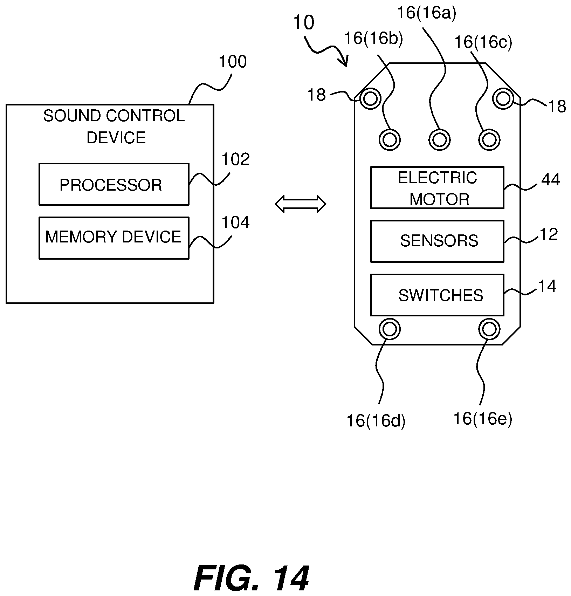

FIG. 14 is a conceptual diagram illustrating an electric vehicle 10 according to a third embodiment of the present disclosure and a sound control device 100 applied to the electric vehicle 10. In the example shown in FIG. 14, the electric vehicle 10 includes a speaker 18. The speaker 18 corresponds to the "exterior speaker" of the present disclosure. The speaker 18 outputs sound to the outside of the vehicle cabin of the electric vehicle 10. The total number of speakers constituting the speaker 18 and the layout of the speaker 18 can be arbitrarily changed.

3-2. Process of pseudo engine sound

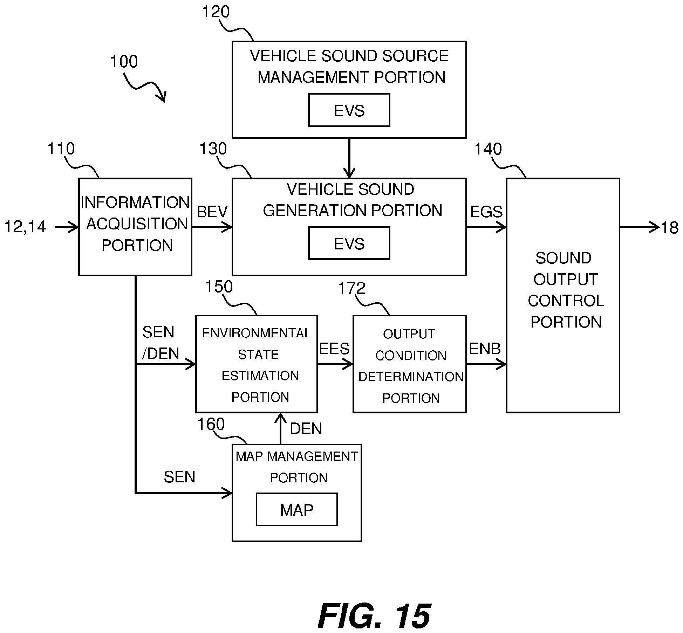

As in the first embodiment, the engine sound data EGS is processed in the third embodiment. FIG. 15 is a block diagram illustrating an example of a functional configuration of the sound control device 100 particularly relevant to the third embodiment. In the example shown in FIG. 15, the sound control device 100 includes an output condition determination portion 172 in addition to the function blocks 100 - 160 shown in FIG. 4. These function blocks are realized by cooperation of the processor 102 and the memory device 104, for example.

The output condition determination portion 172 determines whether or not the output condition of the engine sound data EGS as the exterior sound is satisfied. The determination of whether the output condition is satisfied is performed based on the estimated result EES received from the environmental state estimation portion 150. As in the first embodiment, in the third embodiment, a list is referred to using the estimated result EES. Then, when there is the estimated result EES that matches the specific environmental state ES, it is determined that the output condition is satisfied.

In the third embodiment, the specific environmental state ES includes the following states:

(13) The vehicle speed of the electric vehicle is equal to or less than a threshold; and
(14) A moving object is not detected around the electric vehicle approach of an emergency vehicle to the electric vehicle is not detected or entry of the electric vehicle into a quiet recommended zone is not detected.

When it is determined that the output condition is satisfied, the output condition determination portion 172 transmits an output permission signal ENB of the exterior sound to the sound output control portion 140. When the output permission signal ENB is received, the sound output control portion 140 outputs the engine sound data EGS received from the engine sound generation portion 130 from the speaker 18. Here, the specific environmental state (13) may include a state in which the headlight of the electric vehicle 10 is not turned on. That is, the specific environmental state (13) may be a state in which the headlight is not turned on and the vehicle speed of the electric vehicle is equal to or less than the threshold.

3-3. Effect

According to the third embodiment, when it is determined that the output condition is satisfied, the engine sound data EGS can be output to the outside of the vehicle cabin of the electric vehicle 10. An example of the effect of the output of the engine sound data EGS to the outside of the vehicle is as follows in the case of the specific environmental states ES (13) and (14).

(13) The engine sound data EGS is output to the outside of the vehicle cabin when the vehicle speed of the electric vehicle is equal to or less than the threshold, and thus it is possible to make the surroundings of the electric vehicle aware of the presence of the electric vehicle. When the headlight is turned on, this effect can be achieved by a combination of pseudo engine sound and light or by light alone.

(14) By limiting the environmental state in which the engine sound data EGS is output to the outside of the vehicle, driving (driving without concern) in which the surroundings of the electric vehicle are considered is possible.

**Claims**

1. A sound control method applied to an electric vehicle (10) using an electric motor (44) as a power unit for traveling, the method comprising:

   Generating (S11) an interior sound (EGS) to be output from a room speaker (16) of the electric vehicle (10);
   Estimating (S13) an environmental state (EES) of the electric vehicle (10) based on at least one of information on driving environment of the electric vehicle (10) and information on surrounding environment of the electric vehicle (10);
   Determining (S14) whether a process condition of the interior sound is satisfied based on the estimated result of the environmental state (EES); and
   Processing the interior sound (EGS) based on information on sound process specification (PS) corresponding to the estimated result of the environmental state (EES) used for determining the process condition and outputting the processed interior sound from the room speaker when it is determined that the process condition of the interior sound is satisfied.

2. The method according to claim 1,

   wherein the interior sound (EGS) generated in the generating of the interior sound (EGS) includes a pseudo engine sound generated based on operation information of components of the electric vehicle (10), and
   wherein the components include a gas pedal (22), a pseudo clutch pedal (28), and a pseudo shift lever (27).

3. The method according to claim 1,

   wherein the interior sound (EGS) generated in the generating of the interior sound (EGS) includes a pseudo engine sound generated based on operation information of components of the electric vehicle (10), and
wherein the components include a gas pedal (22) and pseudo shift paddles (24).

4. The method according to any one of claims 1 to 3, wherein:

   the process condition of the interior sound (EGS) includes that a visibility of the electric vehicle (10) is low; and
   when the estimated result of the environmental state (EES) is the low visibility of the electric vehicle (10), the sound process specification (PS) includes processing for reducing sound pressure of the interior sound (EGS).

5. The method according to any one of claims 1 to 3, wherein:

   the interior sound (EGS) generated in the generating of the interior sound (EGS) includes a pseudo engine sound generated based on operation information of components of the electric vehicle (10);
   the components include a gas pedal (22);
   the process condition of the interior sound (EGS) includes that a traveling road surface of the electric vehicle (10) is poor; and
   when the estimated result of the environmental state (EES) is the poor traveling road surface, the sound process specification (PS) includes processing for delaying an output timing of the pseudo engine sound from the room speaker, which is caused to perform vertical motion in response to a change in accelerator position, as compared to an output timing of the pseudo engine sound from the room speaker when the estimated result of the environmental state (EES) is not the poor traveling road surface.

6. The method according to any one of claims 1 to 3, wherein:

   the process condition of the interior sound (EGS) includes a detection of a moving object around the electric vehicle (10); and
   when the estimated result of the environmental state (EES) is the detection of the moving object, the sound process specification (PS) includes processing for reducing sound pressure of the interior sound (EGS).

7. The method according to any one of claims 1 to 3, wherein:

   the process condition of the interior sound (EGS) includes a detection of an approach of an emergency vehicle to the electric vehicle (10) is detected; and

when the estimated result of the environmental state (EES) is the detection of the emergency vehicle approaching, the sound process specification (PS) includes processing for reducing sound pressure of the interior sound (EGS), processing for superimposing ambient environmental sound of the electric vehicle (10) on the interior sound (EGS), or processing for superimposing a sound effect corresponding to an emergency vehicle sound on the interior sound (EGS).

8. The method according to any one of claims 1 to 3, wherein:

the process condition of the interior sound (EGS) includes a detection of entry of the electric vehicle (10) into a quiet recommended zone; and

when the estimated result of the environmental state (EES) is the detection of entry into the quiet zone, the sound process specification (PS) includes processing for reducing sound pressure of the interior sound (EGS).

9. The method according to any one of claims 1 to 3, wherein:

the process condition of the interior sound (EGS) includes that a following vehicle is detected in a second lane when the electric vehicle (10) changes a lane from a first lane to the second lane; and

when the estimated result of the environmental state (EES) is detection of the following vehicle at the time of the lane change, the sound process specification (PS) includes processing for reducing sound pressure of the interior sound (EGS).

10. The method according to any one of claims 1 to 3, wherein:

the process condition of the interior sound (EGS) includes that a sound pressure of ambient noise of the electric vehicle (10) exceeds a threshold; and

when the estimated result of the environmental state (EES) is greater than the threshold of the sound pressure of the ambient noise, the sound process specification (PS) includes processing for reducing the sound pressure of the interior sound (EGS).

11. The method according to any one of claims 1 to 3, wherein:

the interior sound (EGS) generated in the generating of the interior sound (EGS) includes a pseudo engine sound generated based on operation information of components of the electric vehicle (10),

the process condition of the interior sound (EGS) includes a detection of an entry of the electric vehicle (10) into a tunnel area; and

when the estimated result of the environmental state (EES) is the detection of the entry into the tunnel area, the sound process specification (PS) includes processing for superimposing a sound effect corresponding to tunnel wall reflection sound of the pseudo engine sound on the interior sound (EGS).

12. The method according to any one of claims 1 to 3, wherein:

the process condition of the interior sound (EGS) includes a detection of an approach of the electric vehicle (10) to an event area; and

when the estimated result of the environmental state (EES) is the detection of the approach to the event area, the sound process specification (PS) includes processing for reducing sound pressure of the interior sound (EGS), processing for superimposing ambient environmental sound of the electric vehicle (10) on the interior sound (EGS), or processing for superimposing a sound effect corresponding to an event being held in the event area on the interior sound (EGS).

13. The method according to any one of claims 1 to 3, wherein:

the process condition of the interior sound (EGS) includes a detection of an entry of the electric vehicle (10) into a highland area; and

when the estimated result of the environmental state (EES) is the detection of the entry into the highland area, the sound process specification (PS) includes processing for superimposing a sound effect corresponding to an abnormal burning sound of a pseudo engine on the interior sound (EGS).

14. The method according to any one of claims 1 to 3, wherein:

the process condition of the interior sound (EGS) includes a condition that a reproduction mode of an engine sound in the electric vehicle (10) is set to a convertible car reproduction mode; and

when the estimated result of the environmental state (EES) is the setting of the convertible car reproduction mode, the sound process specification (PS) includes processing for superimposing a sound effect corresponding to an intake air sound and an exhaust sound of an engine on the interior sound (EGS).

15. A sound control device (100, 200, 300) applied to an electric vehicle (10) using an electric motor (44) as a power unit for traveling, comprising:

one or more memory devices (104) configured to store information on driving environment of the electric vehicle (10), information on surrounding environment of the electric vehicle (10), and information indicating a correspondence between a specific environmental state of the electric vehicle (10) and a sound process specification (PS); and
one or more processors (102) configured to perform various processing,
wherein the one or more processors are configured to:

generate an interior sound (EGS) to be output from a room speaker of the electric vehicle (10);
estimate an environmental state (EES) of the electric vehicle (10) based on at least one of information on driving environment of the electric vehicle (10) and information on surrounding environment of the electric vehicle (10);
determine whether a process condition of the interior sound (EGS) is satisfied based on the estimated result of the environmental state (EES); and
process the interior sound (EGS) based on information on sound process specification (PS) corresponding to the estimated result of the environmental state (EES) used for the determination of the process condition and output the interior sound (EGS) to the room speaker when it is determined that the process condition of the interior sound (EGS) is satisfied.

**FIG. 1**

**FIG. 2**

120

VEHICLE SOUND SOURCE
MANAGEMENT PORTION

| EVS1 | ··· | EVSn |

100

110

INFORMATION
ACQUISITION
PORTION

12,14 →

BEV →

130

VEHICLE SOUND
GENERATION PORTION

EVSk

EGS →

140

SOUND
OUTPUT
CONTROL
PORTION

→16

# FIG. 3

120 — VEHICLE SOUND SOURCE MANAGEMENT PORTION — EVS

100

110 — INFORMATION ACQUISITION PORTION

12,14 →

130 — VEHICLE SOUND GENERATION PORTION — EVS

140 — SOUND OUTPUT CONTROL PORTION

BEV

EGS

→16

SEN /DEN

150 — ENVIRONMENTAL STATE ESTIMATION PORTION

EES

170 — PROCESS CONDITION DETERMINATION PORTION

PS

160 — MAP MANAGEMENT PORTION — MAP

DEN

SEN

PS

180 — EFFECT SOUND MANAGEMENT PORTION — EFS

EFS@PS

*FIG. 4*

20

EP 4 553 825 A1

| ES | PS |
|----|----|
| ES1 | PS1 |
| ES2 | PS2 |
| ES3 | PS3 |
| ES4 | PS1 |
| ⋮ | ⋮ |
| ESi | PSj |

# FIG. 5

21

**FIG. 6**

START

ACQUIRE BEV — S11

GENERATE EGS — S12

ESTIMATE ENVIRONMENTAL STATE — S13

PROCESS CONDITION? — S14

NO

YES

OUTPUT EGS_P TO SPEAKER — S16

OUTPUT EGS TO SPEAKER — S15

END

*FIG. 7*

10

22 GAS PEDAL

32 ACCELERATOR POSITION SENSOR

50 CONTROLLER

24 SHIFT PADDLES

34u

34d

AUTOMATIC MODE TORQUE CALCULATION PORTION 54

26 WHEELS

36 WHEEL SPEED SENSOR

MANUAL MODE TORQUE CALCULATION PORTION 56

38 ROTATION SPEED SENSOR

46 BATTERY

INVERTER 42

ELECTRIC MOTOR 44

*FIG. 8*

FIG. 9

**MOTOR TORQUE**

NORMAL EV's TORQUE CHARACTERISTICS

1st
2nd
3rd
4th
5th
6th

**MOTOR ROTATIONAL SPEED**

*FIG. 10*

**FIG. 11**

100

SOUND CONTROL
DEVICE

PROCESSOR | 102

MEMORY DEVICE | 104

200

NAVIGATION SYSTEM

PROCESSOR | 202

MEMORY DEVICE | 204

300

AUDIO SYSTEM

PROCESSOR | 302

MEMORY DEVICE | 304

## FIG. 12

FIG. 13

FIG. 14

**FIG. 15**

**EUROPEAN SEARCH REPORT**

Europäisches Patentamt
European Patent Office
Office européen des brevets

Application Number

EP 24 20 5724

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2011 215436 A (NAMCO BANDAI GAMES INC) 27 October 2011 (2011-10-27) | 1-4, 6-10,12, 15 | INV. G10K15/02 |
| A | * paragraphs [0004] - [0006], [0031] - [0035], [0045], [0046], [0054] - [0067], [0076] - [0082], [0119], [0120], [0169] * <br> * paragraphs [0172], [0175], [0176], [0184] - [0199], [0201] - [0215], [0217] - [0220], [0223], [0236] - [0239] * <br> * figures 1,2,22-31 * | 5,11,13, 14 | ADD. B60Q5/00 |
| X | JP 2014 240239 A (PANASONIC CORP) 25 December 2014 (2014-12-25) | 1-3,5,7, 9-15 | |
| A | * figures 1-5 * <br> * paragraphs [0001], [0015] - [0025], [0027] - [0062], [0063] - [0071] * | 4,6,8 | |

----- 

TECHNICAL FIELDS SEARCHED (IPC)

B60Q
G10K

The present search report has been drawn up for all claims

| Place of search | Date of completion of the search | Examiner |
|---|---|---|
| The Hague | 18 March 2025 | Sartoni, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 5724

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2025

| Patent document cited in search report | Publication date | Patent family member(s) | Publication date |
|---|---|---|---|
| JP 2011215436 A | 27-10-2011 | NONE | |
| JP 2014240239 A | 25-12-2014 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011215437 A
- JP 2022036005 A
- JP 2011213273 A